# EUROPEAN PATENT SPECIFICATION

(11) **EP 2 690 794 B1**
(45) Date of publication and mention of the grant of the patent: **21.06.2017**
(21) Application number: 12178126.4
(22) Date of filing: 26.07.2012
(51) Int. Cl.: H04B 1/3827, H04B 1/04

(54) **Methods and apparatus for tuning a communication device**
Verfahren und Vorrichtung zur Einstellung einer Kommunikationsvorrichtung
Procédés et appareil de réglage d'un dispositif de communication

(43) Date of publication of application: 29.01.2014
(73) Proprietor: BlackBerry Limited, Waterloo, ON N2K 0A7 (CA)
(72) Inventor: Man, Ying, Tong, Waterloo, Ontario N2L 3W8 (CA)
(74) Representative: MERH-IP Matias Erny Reichl Hoffmann Patentanwälte PartG mbB

(56) References cited:
- EP-A2- 1 079 296
- WO-A2-2012/085932
- US-A- 5 548 837
- US-A1- 2008 300 027
- US-A1- 2011 281 532
- US-A1- 2012 075 159

## Description

### FIELD OF THE DISCLOSURE

The subject disclosure relates to methods and apparatus for tuning a communication device.

### BACKGROUND

Cellular communication devices such as cellular telephones, tablets, and laptops can support multi-cellular access technologies, peer-to-peer access technologies, personal area network access technologies, and location receiver access technologies, which can operate concurrently. Cellular communication devices have also integrated a variety of consumer features such as MP3 players, color displays, gaming applications, cameras, and other features. Cellular communication devices can be required to communicate at a variety of frequencies, and in some instances are subjected to a variety of physical and functional use conditions.
WO 2012/085931 A2 discloses an RF signal quality enhancement system, wherein changes in the device proximity environment and in the signal quality are detected and the radiation pattern is varied accordingly.
US 2008/0300027 A1 is directed at a system for reducing power consumption in a mobile computing device. A user environment is determined based on detected antenna impedance or current. The power level input to the antenna is adjusted according to the user environment.

### BRIEF DESCRIPTION OF THE DRAWINGS

Reference will now be made to the accompanying drawings, which are not necessarily drawn to scale, and wherein:
FIG. 1 depicts an illustrative embodiment of a communication device;
FIG. 2 depicts an illustrative embodiment of a portion of a transceiver of the communication device of FIG. 1;
FIGs. 3-6 depict illustrative embodiments of a tunable matching network of the transceiver of FIG. 2;
FIG. 7 depicts an illustrative embodiment of a look-up table utilized by the communication device of FIG. 1 for controlling tunable reactive elements utilized by the communication device;
FIGs. 8-11 depict illustrative physical and operational use cases of a communication device;
FIG. 12 depicts an exemplary method that can be used for tuning components of the communication device of FIG. 1;
FIG. 13 depicts an illustrative diagrammatic representation of a machine in the form of a computer system within which a set of instructions, when executed, may cause the machine to perform any one or more of the methodologies disclosed herein.

### DETAILED DESCRIPTION

The subject disclosure describes, among other things, illustrative embodiments for tuning a communication device. Other embodiments are described by the subject disclosure.

One embodiment of the subject disclosure includes a communication device having an antenna, a tunable circuit having a variable reactive impedance, a memory storing computer instructions, a processor coupled to the memory, the tunable circuit, and the antenna. The processor, responsive to executing the computer instructions, can perform operations including initiating a mode of operation of the communication device, measuring a signal to determine an adverse state caused by the mode of operation of the communication device, determining a tuning state from the signal, tuning the tunable circuit according to the tuning state to compensate for the adverse state, storing the tuning state in a look-up table, detecting a reinitiating of the mode of operation of the communication device, retrieving the tuning state from the look-up table, and tuning the tunable circuit according to the tuning state retrieved from the look-up table. In one embodiment, the mode of operation of the communication device can be an execution of a software application such as a video game.

One embodiment of the subject disclosure includes a computer-readable storage medium having computer instructions, which when executed by a processor, cause the processor to perform operations, including initiating a mode of operation of a communication device, measuring a signal to determine an adverse effect on one or more performance metrics of the communication device, determining a tuning state from the signal, tuning a circuit having a variable reactance according to the tuning state, storing in a memory the tuning state, detecting a reoccurrence of the mode of operation of the communication device, retrieving the tuning state from the memory, and tuning the circuit according to the tuning state retrieved from the memory.

One embodiment of the subject disclosure includes a method for initiating, by a communication device comprising a processor, a mode of operation of the communication device, measuring, by the communication device, a signal to determine an adverse operational effect on the communication device, determining, by the communication device, a tuning state from the signal to compensate for the adverse operational effect, tuning, by the communication device, a circuit of the communication device having a variable reactance according to the tuning state, storing, by the communication device, the tuning state in a memory of the communication device, and tuning, by the communication device, the circuit according to the tuning state retrieved from the memory responsive to detecting a reoccurrence of the mode of operation of the communication device.

One embodiment of the subject disclosure includes a computer-readable storage medium, comprising computer instructions, which when executed by a processor, cause the processor to perform operations, comprising initiating a mode of operation of a communication device, measuring a signal to determine an adverse effect on one or more performance metrics of the communication device, determining a tuning state from the signal, tuning a circuit having a variable reactance according to the tuning state, storing in a memory the tuning state, detecting a reoccurrence of the mode of operation of the communication device, retrieving the tuning state from the memory, and tuning the circuit according to the tuning state retrieved from the memory.

In one embodiment of the subject disclosure, the initiating of the mode of operation of the communication device can comprise presenting a prompt at a user interface of the communication device to calibrate the communication device, detecting user input at the user interface responsive to the prompt, and initiating the mode of operation of the communication device responsive to detecting the user input.

In one embodiment of the subject disclosure, the circuit can comprise one or more variable capacitors, one or more variable inductors, or combinations thereof.

In one embodiment of the subject disclosure, the mode of operation of the communication device can be one of a data communication session, a voice communication session, or execution of a software application.

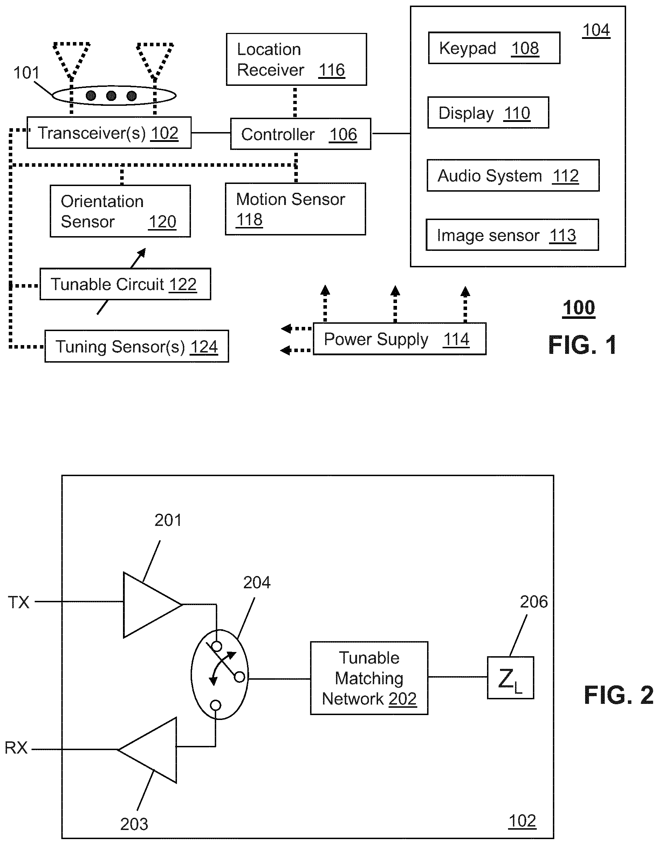

FIG. 1 depicts an illustrative embodiment of a communication device 100. The communication device 100 can comprise one or more transceivers 102 coupled to one or more antennas 101, each transceiver having transmitter and receiver sections (herein transceiver 102 or transceivers 102), a tunable circuit 122, one or more tuning sensors 124, a user interface (UI) 104, a power supply 114, a location receiver 116, a motion sensor 118, an orientation sensor 120, and a controller 106 for managing operations thereof. The transceiver 102 can support short-range or long-range wireless access technologies such as Bluetooth, ZigBee, Wireless Fidelity (WiFi), Digital Enhance Cordless Telecommunications (DECT), or cellular communication technologies, just to mention a few.

Cellular technologies can include, for example, Global System for Mobile (GSM), Code Division Multiple Access (CDMA), Time Division Multiple Access (TDMA), Universal Mobile Telecommunications (UMTS), World interoperability for Microwave (WiMAX), Software Defined Radio (SDR), Long Term Evolution (LTE), as well as other next generation wireless communication technologies as they arise. The transceiver 102 can also be adapted to support circuit-switched wireline access technologies such as Public Switched Telephone Network (PSTN), packet-switched wireline access technologies such as TCP/IP, Voice over IP-VoIP, etc., or combinations thereof.

The tunable circuit 122 can comprise variable reactive elements such as variable capacitors, variable inductors, or combinations thereof that are tunable with digital and/or analog bias signals. The tunable circuit 122 can represent a tunable matching network coupled to the antenna 101 to compensate for a change in impedance of the antenna 101, a compensation circuit to compensate for mutual coupling in a multi-antenna system, an amplifier tuning circuit to control operations of an amplifier of the transceiver 102, a filter tuning circuit to alter a pass band of a filter used by the transceiver 102, and so on.

The tuning sensors 124 can be placed at any stage of the transceiver 102 such as, for example, before or after a matching network 202, and/or at a power amplifier 201 as shown in FIG. 2. The tuning sensors 124 can utilize any suitable sensing technology such as directional couplers, voltage dividers, or other sensing technologies to measure signals at any stage of the transceiver 102. The digital samples of the measured signals can be provided to the controller 106 by way of analog-to-digital converters included in the tuning sensors 124. Data provided to the controller 106 by the tuning sensors 124 can be used to measure, for example, transmit power, transmitter efficiency, receiver sensitivity, power consumption of the communication device 100, frequency band selectivity by adjusting filter passbands, linearity and efficiency of power amplifiers, specific absorption rate (SAR) requirements, and so on. The controller 106 can be configured to execute one or more tuning algorithms to determine desired tuning states of the tunable circuit 122 based on the foregoing measurements.

The UI 104 can include a depressible or touch-sensitive keypad 108 with a navigation mechanism such as a roller ball, a joystick, a mouse, or a navigation disk for manipulating operations of the communication device 100. The keypad 108 can be an integral part of a housing assembly of the communication device 100 or an independent device operably coupled thereto by a tethered wireline interface (such as a USB cable) or a wireless interface supporting, for example, Bluetooth. The keypad 108 can represent a numeric keypad commonly used by phones, and/or a QWERTY keypad with alphanumeric keys. The UI 104 can further include a display 110 such as monochrome or color LCD (Liquid Crystal Display), OLED (Organic Light Emitting Diode) or other suitable display technology for conveying images to an end user of the communication device 100. In an embodiment where the display 110 is touch-sensitive, a portion or all of the keypad 108 can be presented by way of the display 110 with navigation features.

The display 110 can use touch screen technology to also serve as a user interface for detecting user input. As a touch screen display, the communication device 100 can be adapted to present a user interface with graphical user interface (GUI) elements that can be selected by a user with a touch of a finger. The touch screen display 110 can be equipped with capacitive, resistive or other forms of sensing technology to detect how much surface area of a user's finger has been placed on a portion of the touch screen display. This sensing information can be used to control the manipulation of the GUI elements or other functions of the user interface. The display 110 can be an integral part of the housing assembly of the communication device 100 or an independent device communicatively coupled thereto by a tethered wireline interface (such as a cable) or a wireless interface.

The UI 104 can also include an audio system 112 that utilizes audio technology for conveying low volume audio (such as audio heard in proximity of a human ear) and high volume audio (such as speakerphone for hands free operation). The audio system 112 can further include a microphone for receiving audible signals of an end user. The audio system 112 can also be used for voice recognition applications. The UI 104 can further include an image sensor 113 such as a charged coupled device (CCD) camera for capturing still or moving images.

The power supply 114 can utilize common power management technologies such as replaceable and rechargeable batteries, supply regulation technologies, and/or charging system technologies for supplying energy to the components of the communication device 100 to facilitate long-range or short-range portable applications. Alternatively, or in combination, the charging system can utilize external power sources such as DC power supplied over a physical interface such as a USB port or other suitable tethering technologies.

The location receiver 116 can utilize location technology such as a global positioning system (GPS) receiver capable of assisted GPS for identifying a location of the communication device 100 based on signals generated by a constellation of GPS satellites, which can be used for facilitating location services such as navigation. The motion sensor 118 can utilize motion sensing technology such as an accelerometer, a gyroscope, or other suitable motion sensing technology to detect motion of the communication device 100 in three-dimensional space. The orientation sensor 120 can utilize orientation sensing technology such as a magnetometer to detect the orientation of the communication device 100 (north, south, west, and east, as well as combined orientations in degrees, minutes, or other suitable orientation metrics).

The communication device 100 can use the transceiver 102 to also determine a proximity to or distance to cellular, WiFi, Bluetooth, or other wireless access points by sensing techniques such as utilizing a received signal strength indicator (RSSI) and/or signal time of arrival (TOA) or time of flight (TOF) measurements.

The controller 106 can utilize computing technologies such as a microprocessor, a digital signal processor (DSP), and/or a video processor with associated storage memory such as Flash, ROM, RAM, SRAM, DRAM or other storage technologies for executing computer instructions, controlling, and processing data supplied by the aforementioned components of the communication device 100.

Other components not shown in FIG. 1 can be added to the communication device 100. For example, the communication device 100 can include a slot for inserting or removing an identity module such as a Subscriber Identity Module (SIM) card. SIM cards can be used for identifying and registering subscriber services, executing computer programs, storing subscriber data, and so forth.

The communication device 100 as described herein can operate with more or less of the circuit components shown in FIG. 1. It is further noted that communication device 100 be an integral part of consumer or industrial devices such as cellular phones, computers, laptops, tablets, utility meters, telemetry measurement devices, and so on.

FIG. 2 depicts an illustrative embodiment of a portion of the wireless transceiver 102 of the communication device 100 of FIG. 1. In GSM applications, the transmit and receive portions of the transceiver 102 can include amplifiers 201, 203 coupled to a tunable matching network 202 that is in turn coupled to an impedance load 206. The impedance load 206 in the present illustration can be an antenna as shown in FIG. 1 (herein antenna 206). A transmit signal in the form of a radio frequency (RF) signal (TX) can be directed to the amplifier 201 which amplifies the signal and directs the amplified signal to the antenna 206 by way of the tunable matching network 202 when switch 204 is enabled for a transmission session. The receive portion of the transceiver 102 can utilize a pre-amplifier 203 which amplifies signals received from the antenna 206 by way of the tunable matching network 202 when switch 204 is enabled for a receive session. Other configurations of FIG. 2 are possible for other types of cellular access technologies such as CDMA, UMTS, LTE, and so forth. These undisclosed configurations are applicable to the subject disclosure.

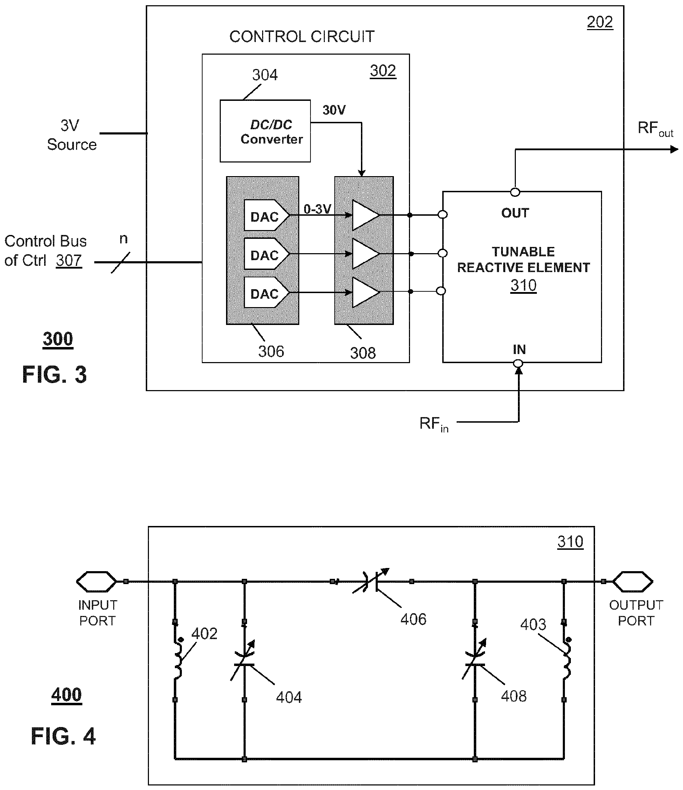

FIGs. 3-4 depict illustrative embodiments of the tunable matching network 202 of the transceiver 102 of FIG. 2. In one embodiment, the tunable matching network 202 can comprise a control circuit 302 and a tunable reactive element 310. The control circuit 302 can comprise a DC-to-DC converter 304, one or more digital to analog converters (DACs) 306 and one or more corresponding buffers 308 to amplify the voltage generated by each DAC. The amplified signal can be fed to one or more tunable reactive components 404, 406 and 408 such as shown in FIG. 4, which depicts a possible circuit configuration for the tunable reactive element 310. In this illustration, the tunable reactive element 310 includes three tunable capacitors 404-408 and two inductors 402-403 with a fixed inductance. Circuit configurations such as "Tee", "Pi", and "L" configurations for a matching circuit are also suitable configurations that can be used in the subject disclosure.

The tunable capacitors 404-408 can each utilize technology that enables tunability of the reactance of the component. One embodiment of the tunable capacitors 404-408 can utilize voltage or current tunable dielectric materials. The tunable dielectric materials can utilize, among other things, a composition of barium strontium titanate (BST). In another embodiment, the tunable reactive element 310 can utilize semiconductor varactors, or micro-electromechanical systems (MEMS) technology capable of mechanically varying the dielectric constant of a capacitor. Other present or next generation methods or material compositions that result in a voltage or current tunable reactive element are applicable to the subject disclosure for use by the tunable reactive element 310 of FIG. 3.

The DC-to-DC converter 304 can receive a DC signal such as 3 volts from the power supply 114 of the communication device 100 in FIG. 1. The DC-to-DC converter 304 can use technology to amplify a DC signal to a higher range (e.g., 30 volts) such as shown. The controller 106 can supply digital signals to each of the DACs 306 by way of a control bus 307 of "n" or more wires or traces to individually control the capacitance of tunable capacitors 404-408, thereby varying the collective reactive impedance of the tunable matching network 202. The control bus 307 can be implemented with a two-wire serial bus technology such as a Serial Peripheral Interface (SPI) bus (referred to herein as SPI bus 307). With an SPI bus 307, the controller 106 can transmit serialized digital signals to configure each DAC in FIG. 3. The control circuit 302 of FIG. 3 can utilize digital state machine logic to implement the SPI bus 307, which can direct digital signals supplied by the controller 106 to the DACs to control the analog output of each DAC, which is then amplified by buffers 308. In one embodiment, the control circuit 302 can be a stand-alone component coupled to the tunable reactive element 310. In another embodiment, the control circuit 302 can be integrated in whole or in part with another device such as the controller 106.

Although the tunable reactive element 310 is shown in a unidirectional fashion with an RF input and RF output, the RF signal direction is illustrative and can be interchanged. Additionally, either port of the tunable reactive element 310 can be connected to a feed point of the antenna 206, a structural element of the antenna 206 in an on-antenna configuration, or between antennas for compensating mutual coupling when diversity antennas are used, or when antennas of differing wireless access technologies are physically in close proximity to each other and thereby are susceptible to mutual coupling. The tunable reactive element 310 can also be connected to other circuit components of a transmitter or a receiver section such as filters, amplifiers, and so on, to control operations thereof.

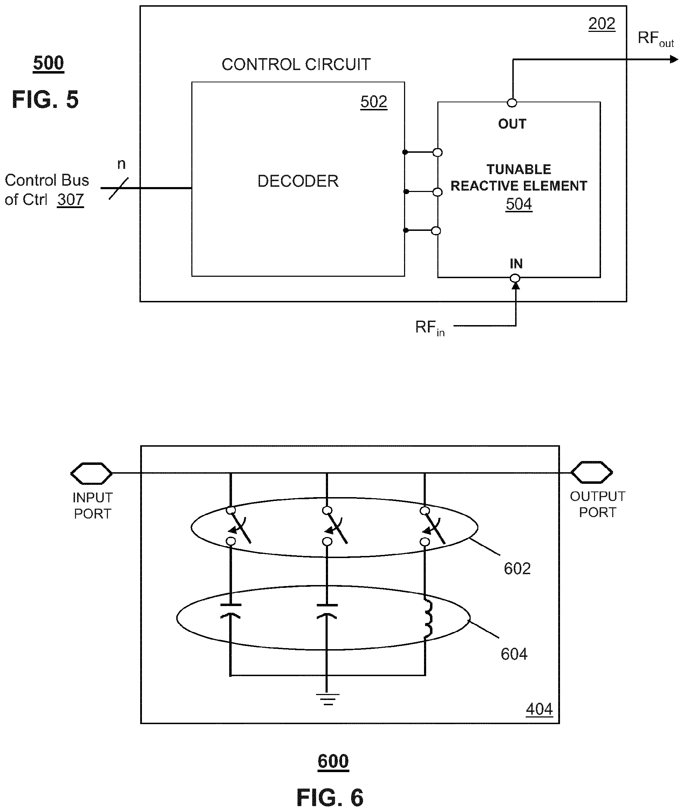

In another embodiment, the tunable matching network 202 of FIG. 2 can comprise a control circuit 502 in the form of a decoder and a tunable reactive element 504 comprising switchable reactive elements such as shown in FIG. 6. In this embodiment, the controller 106 can supply the control circuit 402 signals via the SPI bus 307, which can be decoded with Boolean or state machine logic to individually enable or disable the switching elements 602. The switching elements 602 can be implemented with semiconductor switches, MEMS, or other suitable switching technology. By independently enabling and disabling the reactive elements 607 (capacitor or inductor) of FIG. 6 with the switching elements 602, the collective reactive impedance of the tunable reactive element 504 can be varied by the controller 106.

The tunable reactive elements 310 and 504 of FIGs. 3 and 5, respectively, can be used with various circuit components of the transceiver 102 to enable the controller 106 to manage performance factors such as, for example, but not limited to, transmit power, transmitter efficiency, receiver sensitivity, power consumption of the communication device 100, frequency band selectivity by adjusting filter passbands, linearity and efficiency of power amplifiers, SAR requirements, , among other operational parameters.

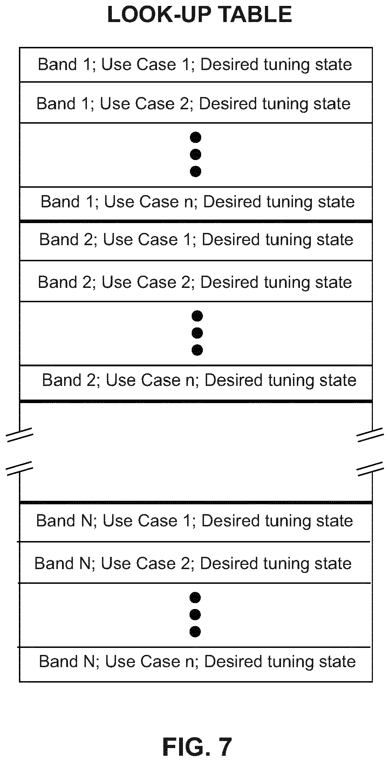

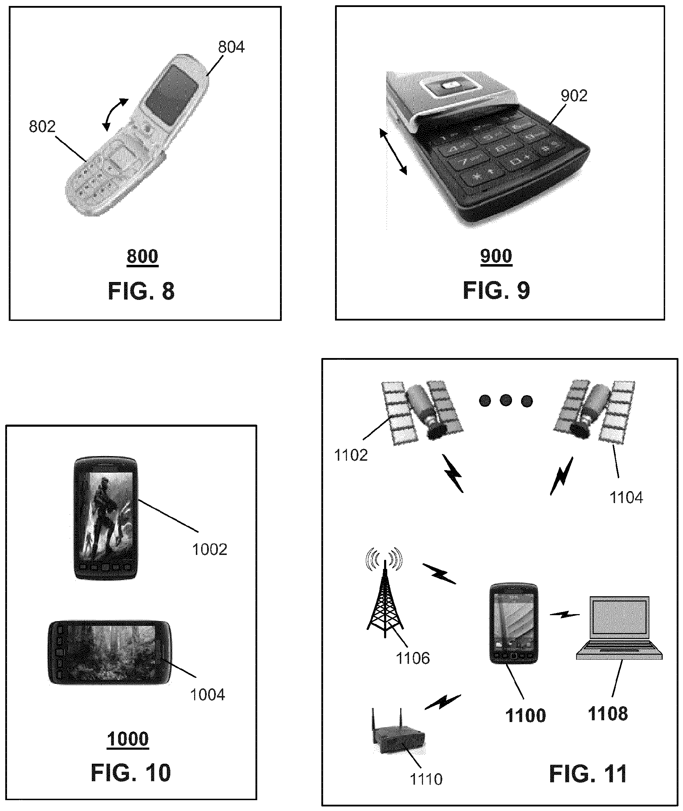

FIG. 7 depicts an illustration of a look-up table stored in memory, which can be indexed by the controller 106 of the communication device 100 of FIG. 1 according to physical and/or functional use cases of the communication device 100. A physical use case can represent a physical state of the communication device 100, while a functional use case can represent an operational state of the communication device 100. For example, for a flip phone 800 of FIG. 8, an open flip can represent one physical use case, while a closed flip can represent another physical use case. In a closed flip state (i.e., bottom and top flips 802-804 are aligned), a user is likely to have his/her hands surrounding the top flip 802 and the bottom flip 804 while holding the phone 800, which can result in one range of load impedances experienced by an internal or retrievable antenna (not shown) of the phone 800. The range of load impedances of the internal or retrievable antenna can be determined by empirical analysis and while the communication device is in operation by a consumer as will be described below.

With the flip open a user is likely to hold the bottom flip 802 with one hand while positioning the top flip 804 near the user's ear when an audio system of the phone 800, such audio system 112 of FIG. 1, is set to low volume, and voice channel is active. If, on the other hand, the audio system 112 is in speakerphone mode, it is likely that the user is positioning the top flip 804 away from the user's ear. In these arrangements, different ranges of load impedances can be experienced by the internal or retrievable antenna, which can be analyzed empirically. The low and high volume states of the audio system 112, as well as, a determination that a voice channel is active illustrates varying functional use cases.

For a phone 900 with a slideable keypad 904 (illustrated in FIG. 9), the keypad in an outward position can present one range of load impedances of an internal antenna, while the keypad in a hidden position can present another range of load impedances, each of which can be analyzed empirically and while a consumer is operating the communication device. For a smartphone 1000 (illustrated in FIG. 10) presenting a video game, an assumption can be made that the user is likely to hold the phone away from the user's ear in order to view the game. Placing the smartphone 1000 in a portrait position 1002 can represent one physical and operational use case, while utilizing the smartphone 1000 in a landscape position 1004 presents another physical and operational use case.

The number of hands and fingers used in the portrait mode may be determined by the particular type of game being played by the user. For example, a particular video game may require a user interface where a single finger in portrait mode may be sufficient for controlling the game. In this scenario, it may be assumed that the user is holding the smartphone 1000 in one hand in portrait mode and using a finger with the other. By empirical analysis, or by measurements when the communication device is in use by a consumer, a possible range of impedances of the internal antenna(s) of the communication device can be determined when using the video game in portrait mode. Similarly, if the video game selected has a user interface that is known to require two hands in landscape mode, another estimated range of impedances of the internal antenna can be determined.

A multimode phone 1100 capable of facilitating multiple access technologies such as GSM, CDMA, LTE, WiFi, GPS, and/or Bluetooth in two or more combinations can provide additional insight into possible ranges of impedances experienced by two or more internal antennas of the multimode phone 1100. For example, a multimode phone 1100 that provides GPS services by processing signals received from a constellation of satellites 1102, 1104 can be empirically analyzed when other access technologies are also in use. Suppose, for instance, that while navigation services are enabled, the multimode phone 1100 is facilitating voice communications by exchanging wireless messages with a cellular base station 1106. In this state, an internal antenna of the GPS receiver may be affected by a use case of a user holding the multimode phone 1100 (e.g., near the user's ear or away from the user's ear). The effect on the GPS receiver antenna and the GSM antenna by the user's hand position can be determined.

Suppose in another scenario that the antenna of a GSM transceiver is in close proximity to the antenna of a WiFi transceiver. Further assume that the GSM frequency band used to facilitate voice communications is near the operational frequency of the WiFi transceiver. Also assume that a use case for voice communications may result in certain physical states of the multimode phone 1100 (e.g., slider out), which can result in a probable hand position of the user of the multimode phone 1100. Such a physical and functional use case can affect the impedance range of the antenna of the WiFi transceiver as well as the antenna of the GSM transceiver.

A close proximity between the WiFi and GSM antennas and the near operational frequency of the antennas may also result in cross-coupling between the antennas. Mutual or cross-coupling under these circumstances can be measured empirically. Similarly, empirical measurements of the impedances of other internal antennas can be measured for particular physical and functional use configurations when utilizing Bluetooth, WiFi, Zigbee, or other access technologies in peer-to-peer communications with another communication device 1108 or with a wireless access point 1110. In diversity designs such as multiple-input and multiple output (MIMO) antennas, physical and functional use cases of a communication device can be measured to determine how best to configure a tunable compensation circuit 122 such as shown in FIG. 1.

The number of physical and functional use cases of a communication device 100 can be substantial when accounting for combinations of access technologies, frequency bands, antennas of different access technologies, antennas configured for diversity designs, and so on. These combinations, however, can be analyzed to determine load impedances of the antenna(s), mutual coupling between them, and the effects on transmitter and receiver performance metrics. Mitigation strategies to reduce mutual coupling, counter the effect of varying load impedances, and to improve other performance metrics of the transceiver 102 can also be determined. The measured data collected and corresponding mitigation strategies can be recorded in the look-up table of FIG. 7 and indexed according to combinations of physical and functional use cases detected by the communication device 100. The information stored in the look-up table can be used in open-loop RF tuning applications to initialize tunable circuit components of the transceiver 102, as well as, tuning algorithms that control operational aspects of the tunable circuit components.

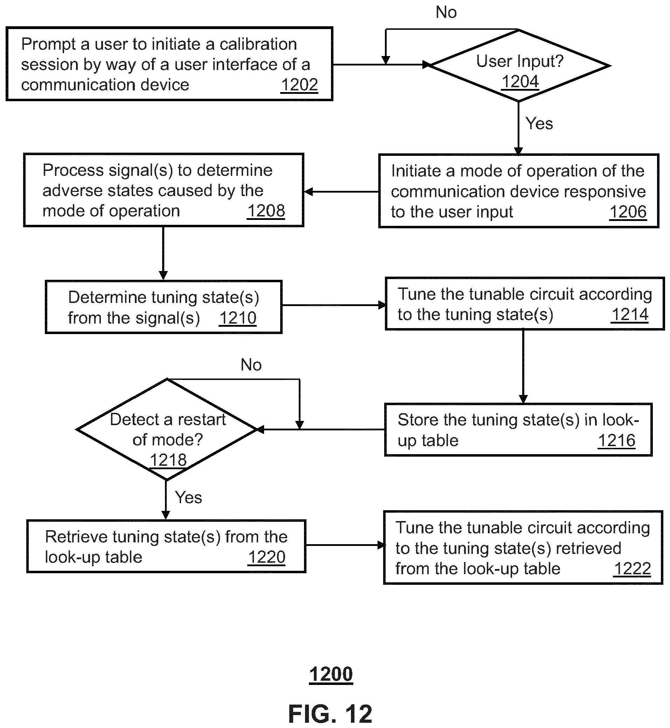

FIG. 12 depicts an illustrative method 1200 that can be used in portions of the devices of FIGs. 1-6. Method 1200 can begin with step 1202 in which the controller 106 of the communication device 100 can be adapted to prompt a user to initiate a calibration session by way of a user interface 104 of the communication device 100. The prompt can be audible, visual, or a combination thereof. The calibration process can be automatically initiated such as a first power-on sequence of the communication device 100 after it is purchased, or calibration can be a periodic feature that is invoked at different times such as, for example, when purchasing a new software application, or when invoking new features of the communication device 100, or combinations thereof. The prompt presented by way of the user interface 104 can request that the user invoke one or more modes of operation of the communication device 100 to test for adverse effects.

The mode of operation of the communication device 100 can include a data communication session (e.g., 3G or 4G session), a voice communication session (GSM, UMTS, or CDMA session), an execution of a software application (e.g., a video game, location services, navigation services, etc.), or combinations thereof. The mode of operation of the communication device 100 can result in combinations of physical and functional use cases as previously described by way of illustration of FIGs. 8-11. If user input invoking the requested mode is detected in step 1204, the communication device 100 proceeds to step 1206 where it initiates the requested mode. At step 1208, the controller 106 can receive signals from the tuning sensors 124 and process the signals to determine adverse states caused by the initiated mode of operation of the communication device 100.

An adverse state can include, for example, detecting a change in impedance of the antenna 101 from a reflection coefficient determined from one of the measured signals resulting in a mismatch between the tunable matching network 202 and the load impedance 206 (i.e., the antenna 101). Another adverse state can include measuring by way of the tuning sensors 124 backscattering current from one of the antennas 101 indicating that there is mutual coupling between multiple antennas. Further adverse effects can include detecting an undesirable efficiency or linearity of an amplifier based on signals measured by the tuning sensors 124. Adverse effects can also include an unexpected increase in power consumption, or other effects that are measurable and controllable.

Based on the adverse states detected in step 1208, the controller 106 can determined at step 1210 from the measured signals and corresponding adverse states one or more tuning states that can be used to program the tunable circuit 122, and thereby compensate for the adverse states. For example, the controller 106 can determine from a measured reflection coefficient a new tuning state (i.e., new impedance) of the tunable matching network 202 to more closely match the present impedance of the antenna 101. Similarly, based on a measure of efficiency or linearity, the controller 106 can determine new tuning states of a power tuning circuit (not shown) of amplifier 201 as mentioned earlier such as, for example, setting bias voltages, supply voltage settings, and/or a new impedance state of a variable reactive circuit coupled to the amplifier 201 to singly or collectively improve the efficiency and/or linearity of the amplifier 201. Other tuning states can be determined for other tunable devices such as tunable bandpass filters, and so on.

At step 1214, the controller 106 proceeds to tune the tunable circuit 122 by supplying digital and/or analog signals to the tunable circuit 122 to establish the tuning states determined in step 1210. At step 1216, the controller 106 can store the tuning states determined at step 1210 in the look-up table of FIG. 7 according to the physical and functional use cases detected in the mode of operation of the communication device 100 initiated at step 1206. Once recorded in the look-up table, the controller 106 can monitor at step 1218 future reoccurrences of the mode of operation that was just calibrated. If a reoccurrence of the same mode is detected, the controller 106 proceeds to step 1220 where it retrieves the tuning states from the look-up table according to this mode, and tunes the tunable circuit 122 according to the retrieved tuning states at step 1222. In one embodiment, step 1220 can be performed without performing 1208 to measure adverse states. In another embodiment, the controller 106 can be configured to periodically, or each time there's a reoccurrence of a mode previously calibrated, reinitiate step 1208 after tuning the tunable circuit 122 with the tuning states retrieved from the look-up table to determine if recalibration is necessary. If the controller 106 determines that an adverse state is present, the controller 106 can be configured to repeat steps 1202-1216.

Steps 1218-1222 provide a rapid approach to counteracting adverse effects on performance parameters of the communication device 100 before they happen. The calibration process described by method 1200 can be invoked for any number of modes of operation of the communication device 100. Method 1200 can also be adapted to store tuning states according to any number of modes of operation of the communication as they occur.

Upon reviewing the aforementioned embodiments, it would be evident to an artisan with ordinary skill in the art that said embodiments can be modified, reduced, or enhanced without departing from the scope of the claims described below. For example, method 1200 can be adapted to also perform closed-loop tuning. That is, after the retrieved tuning states have been used to tune the tunable circuit 122, the controller 106 can be adapted to continuously measure the operational parameters of the communication device 100 by way of the tuning sensors 124 to fine-tune incremental adverse affects that cannot be mitigated by static tuning states.

Method 1200 can also be adapted to detect when a user of the communication device 100 installs a new software application, and can invoke the calibration process to further augment the tuning states stored in the look-up table. Method 1200 can also be configured to monitor use patterns of a user of the communication device 100, measure adverse effects and mitigation strategies that are predictable from such use patterns, and store additional tuning states in the look-up table to further mitigate adverse states of the communication device 100. Method 1200 can also be adapted to model adverse states and in some instances ascertain a mathematical model for tuning states that can be applied in real-time during a mode of operation of the communication device.

Other embodiments can be applied to the subject disclosure without departing from the scope of the claims described below.

It should be understood that devices described in the exemplary embodiments can be in communication with each other via various wireless and/or wired methodologies. The methodologies can be links that are described as coupled, connected and so forth, which can include unidirectional and/or bidirectional communication over wireless paths and/or wired paths that utilize one or more of various protocols or methodologies, where the coupling and/or connection can be direct (e.g., no intervening processing device) and/or indirect (e.g., an intermediary processing device such as a router).

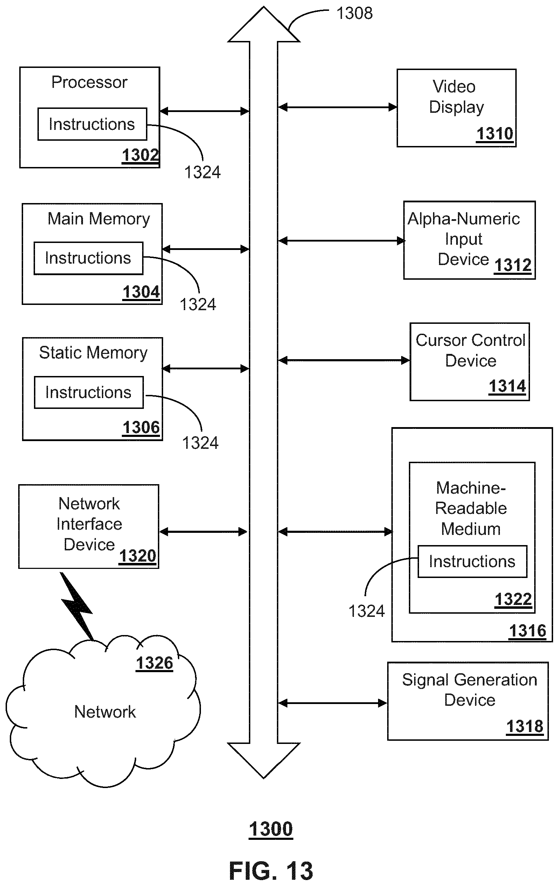

FIG. 13 depicts an exemplary diagrammatic representation of a machine in the form of a computer system 1300 within which a set of instructions, when executed, may cause the machine to perform any one or more of the methods discussed above. One or more instances of the machine can operate, for example, as the communication device 100 of FIG. 1. In some embodiments, the machine may be connected (e.g., using a network) to other machines. In a networked deployment, the machine may operate in the capacity of a server or a client user machine in server-client user network environment, or as a peer machine in a peer-to-peer (or distributed) network environment.

The machine may comprise a server computer, a client user computer, a personal computer (PC), a tablet PC, a smart phone, a laptop computer, a desktop computer, a control system, a network router, switch or bridge, or any machine capable of executing a set of instructions (sequential or otherwise) that specify actions to be taken by that machine. It will be understood that a communication device of the subject disclosure includes broadly any electronic device that provides voice, video or data communication. Further, while a single machine is illustrated, the term "machine" shall also be taken to include any collection of machines that individually or jointly execute a set (or multiple sets) of instructions to perform any one or more of the methods discussed herein.

The computer system 1300 may include a processor (or controller) 1302 (e.g., a central processing unit (CPU), a graphics processing unit (GPU, or both), a main memory 1304 and a static memory 1306, which communicate with each other via a bus 1308. The computer system 1300 may further include a video display unit 1310 (e.g., a liquid crystal display (LCD), a flat panel, or a solid state display. The computer system 1300 may include an input device 1312 (e.g., a keyboard), a cursor control device 1314 (e.g., a mouse), a disk drive unit 1316, a signal generation device 1318 (e.g., a speaker or remote control) and a network interface device 1320.

The disk drive unit 1316 may include a tangible computer-readable storage medium 1322 on which is stored one or more sets of instructions (e.g., software 1324) embodying any one or more of the methods or functions described herein, including those methods illustrated above. The instructions 1324 may also reside, completely or at least partially, within the main memory 1304, the static memory 1306, and/or within the processor 1302 during execution thereof by the computer system 1300. The main memory 1304 and the processor 1302 also may constitute tangible computer-readable storage media.

Dedicated hardware implementations including, but not limited to, application specific integrated circuits, programmable logic arrays and other hardware devices can likewise be constructed to implement the methods described herein. Applications that may include the apparatus and systems of various embodiments broadly include a variety of electronic and computer systems. Some embodiments implement functions in two or more specific interconnected hardware modules or devices with related control and data signals communicated between and through the modules, or as portions of an application-specific integrated circuit. Thus, the example system is applicable to software, firmware, and hardware implementations.

In accordance with various embodiments of the subject disclosure, the methods described herein are intended for operation as software programs running on a computer processor. Furthermore, software implementations can include, but not limited to, distributed processing or component/object distributed processing, parallel processing, or virtual machine processing can also be constructed to implement the methods described herein.

While the tangible computer-readable storage medium 622 is shown in an example embodiment to be a single medium, the term "tangible computer-readable storage medium" should be taken to include a single medium or multiple media (e.g., a centralized or distributed database, and/or associated caches and servers) that store the one or more sets of instructions. The term "tangible computer-readable storage medium" shall also be taken to include any non-transitory medium that is capable of storing or encoding a set of instructions for execution by the machine and that cause the machine to perform any one or more of the methods of the subject disclosure.

The term "tangible computer-readable storage medium" shall accordingly be taken to include, but not be limited to: solid-state memories such as a memory card or other package that houses one or more read-only (non-volatile) memories, random access memories, or other re-writable (volatile) memories, a magneto-optical or optical medium such as a disk or tape, or other tangible media which can be used to store information. Accordingly, the disclosure is considered to include any one or more of a tangible computer-readable storage medium, as listed herein and including art-recognized equivalents and successor media, in which the software implementations herein are stored.

Although the present specification describes components and functions implemented in the embodiments with reference to particular standards and protocols, the disclosure is not limited to such standards and protocols. Each of the standards for Internet and other packet switched network transmission (e.g., TCP/IP, UDP/IP, HTML, HTTP) represent examples of the state of the art. Such standards are from time-to-time superseded by faster or more efficient equivalents having essentially the same functions. Wireless standards for device detection (e.g., RFID), short-range communications (e.g., Bluetooth, WiFi, Zigbee), and long-range communications (e.g., WiMAX, GSM, CDMA, LTE) are contemplated for use by computer system 1300.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, are contemplated by the subject disclosure.

The Abstract of the Disclosure is provided with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

## Claims

1. A communication device (100), comprising:
an antenna (101);
a tunable circuit (122) having a variable reactive impedance;
a memory storing computer instructions; and
a processor coupled to the memory, the tunable circuit (122), and the antenna (101), wherein the processor, responsive to executing the computer instructions, performs operations comprising:
initiating a mode of operation of the communication device (100);
measuring a signal to determine an adverse state caused by the mode of operation of the communication device (100), wherein the adverse state includes a change in an impedance of the antenna (101);
determining a tuning state from the measured signal;
tuning the tunable circuit (122) according to the tuning state to compensate for the adverse state to provide a desired impedance, wherein the tuning of the tunable circuit (122) is responsive to the initiating of the mode of operation;
storing the tuning state in a look-up table;
detecting a reinitiating of the mode of operation of the communication device (100);
retrieving the tuning state from the look-up table; and
repeating the tuning of the tunable circuit (122) according to the tuning state retrieved from the look-up table, wherein the repeating of the tuning of the tunable circuit (122) is responsive to the detecting of the reinitiating of the mode of operation.

2. The communication device (100) of claim 1, wherein the initiating of the mode of operation of the communication device comprises:
presenting a prompt requesting an initiation of the mode of operation of the communication device (100);
detecting user input; and
initiating the mode of operation of the communication device (100) responsive to detecting the user input.

3. The communication device (100) of claim 1 or 2, wherein the determining of the tuning state comprises:
determining a reflection coefficient from the signal; and
determining the tuning state from the reflection coefficient.

4. The communication device (100) of any preceding claim, wherein the mode of operation of the communication device (100) is a communication session.

5. The communication device (100) of claim 4, wherein the communication session is one of a voice communication session or a data communication session.

6. The communication device (100) of claim 4 or 5, wherein the communication session conforms to a long term evolution communication protocol.

7. The communication device (100) of any preceding claim, wherein the mode of operation of the communication device (100) is an execution of a software application.

8. The communication device (100) of any preceding claim, wherein the determining of the tuning state comprises:
determining a measure of a received signal strength indicator from the signal; and
determining the tuning state from the received signal strength indicator.

9. The communication device (100) of any preceding claim, wherein the tunable circuit (122) comprises one of at least one fixed reactive element controlled by one of at least one semiconductor device, at least one micro-electromechanical systems (MEMS) device, or a combination thereof to produce a variable reactance.

10. The communication device (100) of any preceding claim, wherein the tunable circuit (122) comprises one of at least one variable reactive element (310) controlled by at least one MEMS device, a bias signal that varies a dielectric constant of the variable reactive element, or a combination thereof to produce a variable reactance.

11. The communication device (100) of any preceding claim, wherein the tunable circuit (122) comprises at least one of a tunable matching network coupled to the antenna (101) to compensate for a change in impedance of the antenna (101), a compensation circuit to compensate for mutual coupling between the antenna (101) and another antenna of the communication device (100), an amplifier tuning circuit to control operations of an amplifier of the communication device (100), a filter tuning circuit to alter a pass band of a filter of the communication device (100), or combinations thereof.

12. The communication device (100) of any preceding claim, wherein the measured signal is received from the antenna (101), and wherein the tuning of the tunable circuit (122) according to the tuning state retrieved from the look-up table is performed without repeating the measuring of the signal to determine the adverse state.

13. The communication device (100) of any preceding claim, wherein the communication device (100) is one of a cellular telephone, a tablet, or a computer.

14. A method (1200), comprising:
initiating (1206), by a communication device (100) comprising a processor, a mode of operation of the communication device (100);
measuring (1208), by the communication device (100), a signal to determine an adverse operational effect on the communication device (100), wherein the adverse operational effect includes a change in an impedance;
determining (1210), by the communication device (100), a tuning state from the measured signal to compensate for the adverse operational effect to provide a desired impedance;
tuning (1214), by the communication device (100), a circuit (122) of the communication device (100) having a variable reactance according to the tuning state, wherein the tuning of the circuit (122) is responsive to the initiating of the mode of operation;
storing (1216), by the communication device (100), the tuning state in a memory of the communication device (100); and
repeating the tuning (1222), by the communication device (100), of the circuit (122) according to the tuning state retrieved from the memory responsive to detecting a reoccurrence of the mode of operation of the communication device (100).

15. The method (1200) of claim 14, wherein the initiating of the mode of operation of the communication device (100), comprises:
presenting (1202), by the communication device (100), a prompt at a user interface (104) of the communication device (100) to initiate a calibration process; and
initiating (1206), by the communication device, the mode of operation of the communication device (100) responsive to detecting user input at the user interface (104).

## Patentansprüche

1. Kommunikationsvorrichtung (100), die aufweist:
eine Antenne (101);
eine einstellbare Schaltung (122) mit einer variablen reaktiven Impedanz;
einen Speicher zum Speichern von Computeranweisungen; und
einen Prozessor, der mit dem Speicher, der einstellbaren Schaltung (122) und der Antenne (101) gekoppelt ist, wobei der Prozessor, in Reaktion auf eine Ausführung der Computeranweisungen, Operationen durchführt, die aufweisen:
Initiieren eines Betriebsmodus der Kommunikationsvorrichtung (100);
Messen eines Signals, um einen ungünstigen Zustand zu bestimmen, der durch den Betriebsmodus der Kommunikationsvorrichtung (100) verursacht wird, wobei der ungünstige Zustand eine Änderung einer Impedanz der Antenne (101) umfasst;
Bestimmen eines Einstellzustands aus dem gemessenen Signal;
Einstellen der einstellbaren Schaltung (122) gemäß dem Einstellzustand, um den ungünstigen Zustand zu kompensieren, um eine gewünschte Impedanz vorzusehen, wobei das Einstellen der einstellbaren Schaltung (122) in Reaktion auf das Initiieren des Betriebsmodus ist;
Speichern des Einstellzustands in einer Nachschlagtabelle;
Erfassen eines Wieder-Initiierens des Betriebsmodus der Kommunikationsvorrichtung (100);
Abrufen des Einstellzustands aus der Nachschlagtabelle; und
Wiederholen des Einstellens der einstellbaren Schaltung (122) gemäß dem Einstellzustand, der aus der Nachschlagtabelle abgerufen wird, wobei das Wiederholen des Einstellens der einstellbaren Schaltung (122) in Reaktion auf das Erfassen des Wieder-Initiierens des Betriebsmodus ist.

2. Die Kommunikationsvorrichtung (100) gemäß Anspruch 1, wobei das Initiieren des Betriebsmodus der Kommunikationsvorrichtung aufweist:
Präsentieren einer Aufforderung, die eine Initialisierung des Betriebsmodus der Kommunikationsvorrichtung (100) anfordert;
Erfassen einer Benutzereingabe; und
Initiieren des Betriebsmodus der Kommunikationsvorrichtung (100) in Reaktion auf das Erfassen der Benutzereingabe.

3. Die Kommunikationsvorrichtung (100) gemäß Anspruch 1 oder 2, wobei das Bestimmen des Einstellzustands aufweist:
Bestimmen eines Reflexionskoeffizienten aus dem Signal; und
Bestimmen des Einstellzustands aus dem Reflexionskoeffizienten.

4. Die Kommunikationsvorrichtung (100) gemäß einem vorhergehenden Anspruch, wobei der Betriebsmodus der Kommunikationsvorrichtung (100) eine Kommunikationssitzung ist.

5. Die Kommunikationsvorrichtung (100) gemäß Anspruch 4, wobei die Kommunikationssitzung eine aus einer Sprachkommunikationssitzung oder einer Datenkommunikationssitzung ist.

6. Die Kommunikationsvorrichtung (100) gemäß Anspruch 4 oder 5, wobei die Kommunikationssitzung einem LTE(long term evolution)-Kommunikationsprotokoll entspricht.

7. Die Kommunikationsvorrichtung (100) gemäß einem vorhergehenden Anspruch, wobei der Betriebsmodus der Kommunikationsvorrichtung (100) eine Ausführung einer Softwareanwendung ist.

8. Die Kommunikationsvorrichtung (100) gemäß einem vorhergehenden Anspruch, wobei das Bestimmen des Einstellzustands aufweist:
Bestimmen eines Maßes eines "empfangene Signalstärke"-Indikators aus dem Signal; und
Bestimmen des Einstellzustands aus dem "empfangene Signalstärke"-Indikator.

9. Die Kommunikationsvorrichtung (100) gemäß einem vorhergehenden Anspruch, wobei die einstellbare Schaltung (122) eines aufweist aus zumindest einem festen reaktiven Element, das durch eines aus zumindest eine Halbleitervorrichtung gesteuert wird, zumindest einer MEMS(micro-electromechanical systems)-Vorrichtung oder einer Kombination daraus, um eine variable Reaktanz zu erzeugen.

10. Die Kommunikationsvorrichtung (100) gemäß einem vorhergehenden Anspruch, wobei die einstellbare Schaltung (122) eines aufweist aus zumindest einem variablen reaktiven Element (310), das durch zumindest eine MEMS-Vorrichtung gesteuert wird, einem Bias-Signal, das eine Dielektrizitätskonstante des variablen reaktiven Elements variiert, oder eine Kombination daraus, um eine variable Reaktanz zu erzeugen.

11. Die Kommunikationsvorrichtung (100) gemäß einem vorhergehenden Anspruch, wobei die einstellbare Schaltung (122) zumindest eines aufweist aus einem einstellbaren Anpassungsnetzwerk, das mit der Antenne (101) gekoppelt ist, um eine Änderung der Impedanz der Antenne (101) zu kompensieren, einer Kompensationsschaltung, um eine gegenseitige Kopplung zwischen der Antenne (101) und einer anderen Antenne der Kommunikationsvorrichtung (100) zu kompensieren, einer Verstärkereinstellschaltung zum Steuern von Operationen eines Verstärkers der Kommunikationsvorrichtung (100), einer Filtereinstellschaltung zum Ändern eines Durchlassbands eines Filters der Kommunikationsvorrichtung (100) oder einer Kombinationen daraus.

12. Die Kommunikationsvorrichtung (100) gemäß einem vorhergehenden Anspruch, wobei das gemessene Signal von der Antenne (101) empfangen wird und wobei das Einstellen der einstellbaren Schaltung (122) gemäß dem Einstellzustand, der aus der Nachschlagtabelle abgerufen wird, durchgeführt wird, ohne die Messung des Signals zu wiederholen, um den ungünstigen Zustand zu bestimmen.

13. Die Kommunikationsvorrichtung (100) gemäß einem vorhergehenden Anspruch, wobei die Kommunikationsvorrichtung (100) eine aus einem zellularen Telefon, einem Tablet oder einem Computer ist.

14. Ein Verfahren (1200), das aufweist:
Initiieren (1206), durch eine Kommunikationsvorrichtung (100) mit einem Prozessor, eines Betriebsmodus der Kommunikationsvorrichtung (100);
Messen (1208), durch die Kommunikationsvorrichtung (100), eines Signals, um einen ungünstigen Betriebseffekt auf der Kommunikationsvorrichtung (100) zu bestimmen, wobei der ungünstige Betriebseffekt eine Änderung einer Impedanz umfasst;
Bestimmen (1210), durch die Kommunikationsvorrichtung (100), eines Einstellzustands aus dem gemessenen Signal, um den ungünstigen Betriebseffekt zu kompensieren, um eine gewünschte Impedanz vorzusehen;
Einstellen (1214), durch die Kommunikationsvorrichtung (100), einer Schaltung (122) der Kommunikationsvorrichtung (100), die eine variable Reaktanz hat, gemäß dem Einstellzustand, wobei das Einstellen der Schaltung (122) in Reaktion auf das Initiieren des Betriebsmodus ist;
Speichern (1216), durch die Kommunikationsvorrichtung (100), des Einstellzustands in einem Speicher der Kommunikationsvorrichtung (100);
und
Wiederholen des Einstellens (1222), durch die Kommunikationsvorrichtung (100), der Schaltung (122) gemäß dem Einstellzustand, der aus dem Speicher abgerufen wird, in Reaktion auf ein Erfassen eines Wiederauftretens des Betriebsmodus der Kommunikationsvorrichtung (100).

15. Das Verfahren (1200) gemäß Anspruch 14, wobei das Initiieren des Betriebsmodus der Kommunikationsvorrichtung (100) aufweist:
Präsentieren (1202), durch die Kommunikationsvorrichtung (100), einer Aufforderung an einer Benutzerschnittstelle (104) der Kommunikationsvorrichtung (100), um einen Kalibrierungsprozess zu initiierten; und
Initiieren (1206), durch die Kommunikationsvorrichtung, des Betriebsmodus der Kommunikationsvorrichtung (100) in Reaktion auf ein Erfassen einer Benutzereingabe an der Benutzerschnittstelle (104).

## Revendications

1. Dispositif de communication (100) comprenant :
une antenne (101) ;
un circuit syntonisable (122) ayant une impédance réactive variable ;
une mémoire stockant des instructions d'ordinateur ; et
un processeur couplé à la mémoire, au circuit syntonisable (122) et à l'antenne (101), dans lequel le processeur, en exécutant les instructions d'ordinateur, réalise les opérations consistant à :
initialiser un mode de fonctionnement du dispositif de communication (100) ;
mesurer un signal afin de déterminer un état défavorable causé par le mode de fonctionnement du dispositif de communication (100), l'état défavorable comprenant un changement de l'impédance de l'antenne (101) ;
déterminer un état de syntonisation à partir du signal mesuré ;
accorder le circuit syntonisable (122) en fonction de l'état de syntonisation, afin de compenser l'état défavorable et de produire une impédance souhaitée, l'accord du circuit syntonisable (122) répondant à l'initialisation du mode de fonctionnement ;
enregistrer l'état de syntonisation dans une table de consultation ;
détecter une réinitialisation du mode de fonctionnement du dispositif de communication (100) ;
rechercher l'état de syntonisation dans la table de consultation ; et
répéter l'accord du circuit syntonisable (122) en fonction de l'état de syntonisation qui a été recherché dans la table de consultation, la répétition de l'accord du circuit syntonisable (122) répondant à la détection de la réinitialisation du mode de fonctionnement.

2. Dispositif de communication (100) selon la revendication 1, dans lequel l'opération d'initialisation du mode de fonctionnement du dispositif de communication comprend les opérations consistant à :
présenter un message d'invite demandant une initialisation du mode de fonctionnement du dispositif de communication (100) ;
détecter une saisie de l'utilisateur ; et
initialiser le mode de fonctionnement du dispositif de communication (100) après détection de la saisie de l'utilisateur.

3. Dispositif de communication (100) selon la revendication 1 ou 2, dans lequel l'opération de détermination de l'état de syntonisation comprend les opérations consistant à :
déterminer un coefficient de réflexion à partir du signal ; et
déterminer l'état de syntonisation à partir du coefficient de réflexion.

4. Dispositif de communication (100) selon l'une quelconque des revendications précédentes, dans lequel le mode de fonctionnement du dispositif de communication (100) est une session de communication.

5. Dispositif de communication (100) selon la revendication 4, dans lequel la session de communication est soit une session de communication vocale, soit une session de communication de données.

6. Dispositif de communication (100) selon la revendication 4 ou 5, dans lequel la session de communication est conforme au protocole de communication pour l'Évolution à long terme.

7. Dispositif de communication (100) selon l'une quelconque des revendications précédentes, dans lequel le mode de fonctionnement du dispositif de communication (100) est l'exécution d'une application logicielle.

8. Dispositif de communication (100) selon l'une quelconque des revendications précédentes, dans lequel l'opération de détermination de l'état de syntonisation comprend les opérations consistant à :
déterminer une mesure de l'intensité du signal reçu à partir du signal ; et
déterminer l'état de syntonisation à partir de l'indicateur d'intensité du signal reçu.

9. Dispositif de communication (100) selon l'une quelconque des revendications précédentes, dans lequel le circuit syntonisable (122) comprend soit un élément réactif fixe commandé par au moins un dispositif semiconducteur, soit un dispositif à système micro-électromécanique, MEMS pour « *Micro-Electro-Mechanical System* », soit une combinaison de ceux-ci, afin de produire une réactance variable.

10. Dispositif de communication (100) selon l'une quelconque des revendications précédentes, dans lequel le circuit syntonisable (122) comprend soit un élément réactif variable (310) commandé par au moins un dispositif MEMS, soit un signal de polarisation qui fait varier une constante diélectrique de l'élément réactif variable, soit une combinaison de ceux-ci, afin de produire une réactance variable.

11. Dispositif de communication (100) selon l'une quelconque des revendications précédentes, dans lequel le circuit syntonisable (122) comprend soit un réseau d'adaptation syntonisable couplé à l'antenne (101) pour compenser un changement d'impédance de l'antenne (101), soit un circuit de compensation pour compenser le couplage mutuel entre l'antenne (101) et une autre antenne du dispositif de communication (100), soit un circuit de syntonisation d'amplificateur pour commander le fonctionnement d'un amplificateur du dispositif de communication (100), soit un circuit de syntonisation de filtre pour modifier la bande passante d'un filtre du dispositif de communication (100), soit une combinaison de ceux-ci.

12. Dispositif de communication (100) selon l'une quelconque des revendications précédentes, dans lequel le signal mesuré est reçu via l'antenne (101) et dans lequel l'accord du circuit syntonisable (122) en fonction dé l'état de syntonisation qui a été recherché dans la table de consultation s'exécute sans répéter la mesure du signal pour déterminer l'état défavorable.

13. Dispositif de communication (100) selon l'une quelconque des revendications précédentes, dans lequel le dispositif de communication (100) est soit un téléphone cellulaire, soit une tablette, soit un ordinateur.

14. Procédé (1200) comprenant les étapes consistant à :
initialiser (1206), par un dispositif de communication (100) comprenant un processeur, un mode de fonctionnement du dispositif de communication (100) ;
mesurer (1208) un signal, par le dispositif de communication (100), afin de déterminer un effet défavorable de fonctionnement du dispositif de communication (100), l'effet défavorable de fonctionnement comprenant un changement d'une impédance ;
déterminer (1210), par le dispositif de communication (100), un état de syntonisation à partir du signal mesuré, afin de compenser l'effet défavorable de fonctionnement et fournir une impédance souhaitée ;
accorder (1214), par le dispositif de communication (100), un circuit (122) du dispositif de communication (100) ayant une réactance variable, en fonction de l'état de syntonisation, l'accord du circuit syntonisable (122) répondant à l'initialisation du mode de fonctionnement ;
enregistrer (1216), par le dispositif de communication (100), l'état de syntonisation dans une mémoire du dispositif de communication (100) ; et
répéter l'accord (1222) du circuit (122), par le dispositif de communication (100), en fonction de l'état de syntonisation recherché dans la mémoire, après détection de la nouvelle occurrence du mode de fonctionnement du dispositif de communication (100).

15. Procédé (1200) selon la revendication 14, dans lequel l'étape d'initialisation du mode de fonctionnement du dispositif de communication (100) comprend les étapes consistant à :
présenter (1202), par le dispositif de communication (100), un message d'invite dans une interface utilisateur (104) du dispositif de communication (100) afin de lancer un processus d'étalonnage ; et
initialiser (1206), par le dispositif de communication, le mode de fonctionnement du dispositif de communication (100) après détection de la saisie de l'utilisateur sur l'interface d'utilisateur (104).
